# EUROPÄISCHE PATENTSCHRIFT

(11) **EP 2 703 837 B1**
(45) Veröffentlichungstag und Bekanntmachung des Hinweises auf die Patenterteilung: **16.07.2014**
(21) Anmeldenummer: 12182737.2
(22) Anmeldetag: 03.09.2012
(51) Int. Cl.: G01S 17/88, G01S 17/95

(54) **Sicherheits-Laserscanner**
Safety laser scanner
Scanner laser de sécurité

(43) Veröffentlichungstag der Anmeldung: 05.03.2014
(73) Patentinhaber: SICK AG, 79183 Waldkirch (DE)
(72) Erfinder: Hammes, Markus, 79104 Freiburg (DE); Albert, Magnus, 79104 Freiburg (DE)
(74) Vertreter: Ludewigt, Christoph

(56) Entgegenhaltungen:
- DE-A1- 4 340 756
- DE-A1-102009 028 990
- US-A1- 2010 277 713

## Beschreibung

Die Erfindung betrifft einen Sicherheits-Laserscanner nach dem Oberbegriff des Anspruchs 1.

Zur Überwachung von Arbeitsbereichen werden häufig Sicherheitslaserscanner eingesetzt, wie sie beispielsweise aus DE 43 40 756 A1 bekannt sind. Ein von einem Laser erzeugter Lichtstrahl wird über eine Lichtablenkeinheit in einen Schutzbereich gelenkt und dort von einem gegebenenfalls vorhandenen Objekt remittiert. Zumindest ein Teil des remittierten Lichts gelangt wieder zurück zu der Laserscaneinheit und wird dort von einem Empfänger detektiert. Die Lichtablenkeinheit ist in der Regel schwenkbar bzw. drehbar ausgestaltet, so dass der von dem Laser erzeugte Lichtstrahl ein durch die Schwenk- bzw. Drehbewegung erzeugtes Schutzfeld periodisch überstreicht. Wird ein vom Objekt remittiertes Lichtsignal aus dem Schutzbereich empfangen, so kann aus der Winkelstellung der Ablenkeinheit auf die Winkellage des Objektes im Schutzbereich geschlossen werden. Wird zusätzlich zum Beispiel die Laufzeit von einzelnen Laserlichtpulsen vom Aussenden bis zum Empfang einer Reflexion an dem Objekt überwacht, kann aus der Laufzeit unter Verwendung der Lichtgeschwindigkeit zusätzlich auf die Entfernung des Objektes vom Laserscanner geschlossen werden. Mit den Winkel- und Entfernungsangaben lässt sich der Ort des Objektes ermitteln und die vom Lichtstrahl überstrichene Scanebene vollständig überwachen. Befindet sich in der Scanebene ein unzulässiges Objekt, so kann von der Auswerteeinheit des Scanners ein entsprechendes Warn- oder Stopsignal ausgegeben werden.

Derartige Systeme werden zum Beispiel an Maschinen eingesetzt, bei denen ein Gefahrenbereich überwacht werden muss, der beim Betrieb der Maschine von einer Bedienperson nicht betreten werden darf. Wird mit Hilfe des Laserscanners die Anwesenheit eines unzulässigen Objektes - also zum Beispiel ein Bein einer Bedienperson - im Gefahrenbereich festgestellt, wird ein Nothalt der Maschine bewirkt. Derartige Scansysteme als Sicherheitssensoren müssen zuverlässig arbeiten und haben deshalb hohe Sicherheitsanforderungen, beispielsweise die Norm EN13849 für Maschinensicherheit und insbesondere die Gerätenorm EN61496 für berührungslos wirkende Schutzeinrichtungen (BWS) zu erfüllen.

Zur Erfüllung dieser Sicherheitsnormen sind eine Reihe von Maßnahmen zu treffen, wie z. B. sichere elektronische Auswertung durch redundante, diversitäre Elektronik, Funktionsüberwachung durch beispielsweise Überwachung der Verschmutzung optischer Bauteile, insbesondere einer Frontscheibe und Vorsehen von einzelnen Testzielen mit definierten Reflexionsgraden, die unter den entsprechenden Scanwinkeln erkannt werden müssen.

Solche Sicherheitslaserscanner werden auch an sogenannten FTS ("Fahrerlose Transportsysteme") eingesetzt, um zu verhindern, dass diese Transportsysteme mit Objekten, die ihren Fahrweg kreuzen, wie z. B. Personen, zusammenstoßen.

Im Indoor-Bereich, in dem keine Sichtstörungen von außen auftreten, sind die genannten Maßnahmen zur Erfüllung der Sicherheitsnormen ausreichend. Im Outdoor-Bereich ist der Einsatz von Sicherheitsscannern bisher sehr problematisch. Durch Regen, Nebel, Schnee, Luftverschmutzung wie Staub und dergleichen, wird zum einen die nutzbare optische Leistung in unbekanntem Maße reduziert und damit die Detektionszuverlässigkeit reduziert, zum anderen können diese zu einem nicht vorhersagbarem Ansprechen des Scanners führen, wenn beispielsweise von diesen Objekten Sendestrahlung reflektiert und vom Scanner als "Objekt im Schutzbereich" interpretiert wird. Im Folgenden werden die Wassertröpfchen, Schneekristalle und Staubteilchen, die Regen, Nebel, Schnee, Luftverschmutzung bilden auch "weiche Objekte" genannt werden.

Ein weiteres Problem im Outdoor-Bereich ist, dass beim Auftreten von weichen Objekten die Sendestrahlung in unbekanntem Maße gedämpft wird und damit die Sichtweite in unbekanntem Maße reduziert wird, so dass möglicherweise Objekte im Schutzbereich zwar vorhanden sind aber nicht erkannt werden, weil die Lichtintensität, die letztlich am Empfänger ankommt zu niedrig ist. Hier zeigt sich eine grundsätzliche Schwierigkeit, die dem tastenden Messprinzip des Laserscanners bei der Erfüllung der Sicherheitsansprüche zugrunde liegt. Der Scanner gibt nämlich dann eine gefährliche Bewegung einer Maschine frei, wenn kein Signal aus dem Schutzfeld empfangen wird, und die Maschine wird nur dann gestoppt, wenn ein Objekt in dem Schutzfeld detektiert wird und demzufolge Licht empfangen wird. Somit kann auch eine schlechte Sicht zu dem Ergebnis "kein Licht - Schutzfeld frei" führen, was verhindert werden muss. Dies ist mit ein Hauptgrund, warum Sicherheits-Laserscanner bisher kaum in Outdoor-Anwendungen eingesetzt werden. Da FTS zwingend einen Kollisionsschutz benötigen, ist der Outdoor-Einsatz eines FTS stark eingeschränkt.

Um das Problem der weichen Objekte in den Griff zu bekommen, wurden bisher bei Outdoor-Einsätzen von Laserscannern externe Referenzziele eingesetzt, die der Laserscanner "sehen" muss. Der Einsatz von externen Zielen ist aber nicht nur sehr aufwändig, denn es müssen einerseits die Ziele bereitgestellt werden und andererseits müssen die Ziele in den Laserscanner einprogrammiert werden. Es ist in FTS-Anwendungen auch kaum möglich externe Ziele zu verwenden, denn schließlich bewegt sich das FTS mit dem Laserscanner, so dass die externen Testziele stets in anderer Entfernung und Richtung vom Laserscanner aus gesehen werden und deshalb eine sinnvolle Auswertung nicht möglich ist. Zudem ist die Überprüfung eines externen Testziels lediglich eine "Stichprobenüberprüfung" des Sichtbereichs. Andere Sichtwinkel können durchaus stärker in ihrer Detektionsfähigkeit beeinträchtigt sein als die Richtung des externen Referenzziels.

Aus der DE 10 2009 049 809 A1 ist ein Laserscanner bekannt, der Licht mit unterschiedlichen Wellenlängen aussendet, um die Detektionsgüte bei schlechten Wetterbedingungen, wie Nebel, Schnee, Regen, zu verbessern. Unter verbesserter Detektionsgüte ist vermutlich zu verstehen, dass ein Scanner, der mit verschiedenen Wellenlängen arbeitet, besser "detektieren" kann, weil die Durchdringung von Nebel wellenlängenabhängig ist, der Scanner also mit mehreren Wellenlängen eine größere "Sichtweite" hat als mit nur einer Wellenlänge. Je nach Art der Wetterbedingungen (Tröpfchengröße, Dichte der Tröpfchen etc.) wird eine der Wellenlänge eine größere Reichweite haben als die anderen Wellenlängen.

Den gleichen Sachverhalt beschreibt auch die DE 10 2005 049 471 B4.

Die US 2010/0277713 A1 beschreibt ein optisches System, mit dem einerseits eine Beleuchtung einer Szene erfolgt und andererseits mit einer weiteren Lichtquelle und anderer Wellenlänge eine Objektdetektion mit Entfernungsmessung, wobei die Objekte die verschiedensten Dinge sein können, nämlich Fahrzeuge, Fußgänger oder Staub und Gase.

Die DE 10 2009 028 990 A1 beschreibt einen Scanner, der Licht mit zwei unterschiedlichen Wellenlängen aussendet, um beim Abscannen einer landwirtschaftlichen Fläche den Boden von Pflanzen besser unterscheiden zu können.

Ausgehend von diesem Stand der Technik ist es Aufgabe der Erfindung, einen verbesserten Sicherheits-Laserscanner bereitzustellen, mit der für den Outdoor-Einsatz geeignet ist und auf externe Referenzziel verzichten kann ohne Einbußen für die funktionale Sicherheit.

Diese Aufgabe wird durch einen Sicherheits-Laserscanner mit den Merkmalen des Anspruchs 1 gelöst.

Ein erfindungsgemäßer Sicherheits-Laserscanner zur sicheren Erfassung und Positionsbestimmung von Objekten in einem Überwachungsbereich umfasst:
- eine Lichtsendeeinheit, die Lichtpulse zweier unterschiedlicher Wellenlängen (λ1 und λ2) aussendet,
- eine Ablenkeinheit zum periodischen Abscannen eines den Überwachungsbereich einschließenden Sichtbereichs des Scanners mit dem Sendelicht;
- einen oder mehrere Lichtempfänger zum Bereitstellen von Empfangssignalen entsprechend der an Objekten im Sichtbereich gestreuten Sendelichtpulse,
- eine Auswerteeinheit zum Auswerten der Empfangssignale und Bestimmen der Lichtlaufzeit, so dass über die Lichtlaufzeit und den Drehkwinkel der Ablenkeinheit eine Position der Reflektion bestimmbar ist und zum Ausgeben eines Sicherheitssignals (Warn- oder Abschaltsignal), wenn ein unzulässiges Objekt im Überwachungsbereich detektiert wird,
- wobei die beiden Wellenlängen derart ausgewählt sind, dass bei gleichem Drehwinkel der Ablenkeinheit die den beiden Wellenlängen entsprechenden Empfangssignale bei Streuung an eine Sichttrübung verursachenden weichen Objekten, also die Tröpfchen von Nebel, Regen, Schnee, Staub, einen unterschiedlichen zeitlichen Empfangssignalverlauf aufweisen,
- und wobei die Auswerteeinheit eine Sichttrübungserkennungseinheit umfasst, die ausgebildet ist, die unterschiedlichen zeitlichen Verläufe zu erfassen und aus einem Vergleich der Verläufe eine Sichttrübung zu erkennen,
- und wobei die Auswerteeinheit eine Unterscheidungseinheit umfasst, die die Empfangssignale von Reflektionen an harten Objekten von den Empfangssignalen von Streuungen an den weichen Objekten differenziert.

Unter dem Begriff "harte Objekte" werden typische Objekte, wie Körperteile, Maschinenteile, Wände, Pfosten oder dergleichen, verstanden, die ein Streuverhalten für auftreffendes Licht zeigen, das näherungsweise mit der Theorie der Lambertschen Streuung beschrieben werden kann. Solche Objekte sind grundsätzlich sicherheitskritisch und müssen erkannt werden. Im Gegensatz dazu werden unter dem Begriff "weiche Objekte", solche Objekte verstanden, die ein Streuverhalten zeigen, dass am Besten mit der Mie Theorie beschrieben werden kann. Bei diesen weichen Objekten handelt es sich damit um Wassertropfen von Nebel, Regen oder Schnee mit Durchmessern in der Größenordnung der Lichtwellenlänge. Das Vorhandensein solcher weichen Objekte ist grundsätzlich unkritisch, bedeutet also keine Gefahr. Die Maschine muss nicht gestoppt werden.

Diese Unterscheidung ist ein wesentlicher Kern der Erfindung, denn der Ausgangspunkt der Erfindung beruht auf den physikalisch fundamental unterschiedlichen Prozessen, die den rückgestreuten Empfangssignalen zugrunde liegt. Während sich das Streuverhalten harter Targets näherungsweise mit der Theorie der Lambertschen Streuung beschreiben lässt, liegt den Signalen, die von weichen Targets, bestehend aus kleinen, kugelförmigen Wassertropfen mit Durchmessern in der Größenordnung der verwendeten Wellenlänge, stammen, die Mie-Streuung zugrunde. Daraus resultieren signifikant unterschiedliche Abhängigkeiten des zeitlichen Empfangssignalverlaufs von der Wellenlänge des verwendeten Lichts. Während der Zeitpunkt und auch die Amplitude des Empfangssignals eines Lambertschen Streuers nahezu unabhängig von der verwendeten Wellenlänge sind, erwartet man bei der Mie-Streuung eine deutliche Abhängigkeit der Laufzeit und der Amplitude des Signals von der Wellenlänge.

Die Erfinder haben nun erkannt, dass einerseits das Vorhandensein von weichen Targets damit überhaupt erkannt und darüber hinaus aus den unterschiedlichen Streuverhalten bei verschiedenen Wellenlängen auf den Grad der Sichttrübung durch die weichen Objekte geschlossen werden kann. Andererseits kann das unterschiedliche Streuverhalten an den weichen Objekten einerseits und den harten Objekten andererseits von der Unterscheidungseinheit erkannt werden und damit eine klare Unterscheidung zwischen Reflexionen an den "nur" die Sichttrübung (und Störsignale) verursachenden weichen Objekten und den Reflexionen an den harten Objekten, die der Scanner eigentlich sehen soll, gemacht werden. Das resultiert letztlich in einer Erhöhung der Sicherheit bei der Erkennung von harten Objekten und der Möglichkeit unterschiedlich auf die beiden Fälle zu reagieren. Beispielsweise könnte ein FTS bei aktiver Erkennung von Nebel seine Geschwindigkeit reduzieren, wo es im Fall eines harten Objektes bereits anhalten müsste.

Darüber hinaus kann der Scanner mit der Sichttrübungserkennungseinheit erkennen, wenn die Sichttrübung so stark ist, dass keine sichere Objektdetektion (harter Objekte) mehr möglich ist.

Ein erfindungsgemäßer Sicherheits-Laserscanner ermöglicht eine aktive Erkennung einer Sichttrübung und eine verbesserte Erkennung harter Objekte und damit insgesamt eine wesentliche Erhöhung der Sicherheit bei der Bestimmung von unzulässigen Objekten im Schutzbereich. Dies wird ohne externe Testziele erreicht und ermöglicht damit mobile Outdoor- Anwendungen, wie z. B. FTS.

Gemäß der Erfindung erfasst die Unterscheidungseinheit unterschiedliche Maxima und/oder unterschiedliche Flankensteigungen der zeitlichen Empfangssignalverläufe und wertet diese zur sicheren Erkennung der harten Objekte aus.

In ähnlicher Weise kann die Sichttrübungserkennungseinheit Maxima der Empfangssignalverläufe zu verschiedenen Wellenlängen erfassen und vergleichen und/oder Empfangssignalhöhen bei gleicher Laufzeit in den unterschiedlichen Empfangssignalverläufen erfassen und vergleichen. Damit kann ermittelt werden, ob überhaupt eine Sichttrübung vorliegt. Sie liegt nämlich dann vor, wenn es Unterschiede gibt.

Und die Sichttrübungserkennungseinheit kann feststellen, wie stark die Trübung ist. Daraus kann sie eine Sichtweite bestimmen und bei Unterschreiten einer vorgegebenen minimalen Sichtweite das Sicherheitssignal ausgeben, wodurch die Sicherheit weiter erhöht ist.

Die unterschiedlichen Wellenlängen können auf verschiedene Arten erzeugt werden. In einer ersten Ausführungsform weist die Lichtsendeeinheit nur ein Lichtsendeelement auf, und die zweite Wellenlänge wird durch Frequenzverdoppelung erzeugt. Um die zugehörigen Empfangssignale getrennt empfangen zu können, ist ein zweiter Lichtempfänger vorgesehen und die beiden Wellenlängen werden im Empfangspfad, beispielsweise durch dichroitische Spiegel, optisch getrennt.

Gemäß der Erfindung weist die Lichtsendeeinheit zwei Lichtsendeelemente auf. Die Sendelemente werden zeitlich versetzt betrieben, so dass die Lichtpulse der beiden Lichtsendeelemente im Zeitmultiplex ausgesandt werden.

In Weiterbildung der Erfindung werden die Empfangssignale in einer digitalen Sampelstufe erfasst, so dass die Empfangssignalverläufe gespeichert und dann ausgewertet werden können.

Die Erfindung kann auch in Scannern eingesetzt werden, die nach dem Pulsmittelungsverfahren arbeiten, wie z. B. in der EP 2 479 586 beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung eines Laserscanners gemäß der Erfindung und das Funktionsprinzip;
- Fig. 2: Diagramme von typischen Empfangssignalverläufen zu verschiedenen Sendewellenlängen.

Ein im Folgenden beschriebener Sicherheits-Laserscanner dient zum Beispiel zur Überwachung auf unbefugten Zugriff eines Überwachungsbereichs oder zur Überwachung des Bereichs vor einem autonom fahrenden Fahrzeug. Befindet sich ein unzulässiges Objekt, zum Beispiel das Bein einer Bedienperson, im Überwachungsbereich, so wird dies von dem beschriebenen Scanner detektiert und ein Sicherheitssignal, das ein Warn- oder ein Abschaltsignal sein kann, ausgegeben und entsprechende Maßnahmen eingeleitet, die die Gefahr verhindern, z. B. wird die Gefahr bringende Bewegung der Maschine gestoppt oder zumindest abgebremst.

Der Begriff des "unzulässigen Objektes" wird im vorliegenden Text für unzulässige Objekte im Schutzfeld verwendet, die detektiert werden müssen, um eine Gefahr, z. B. einen Zusammenstoß zu verhindern. Insbesondere können damit zum Beispiel gefährdete Körperteile von Bedienpersonen gemeint sein.

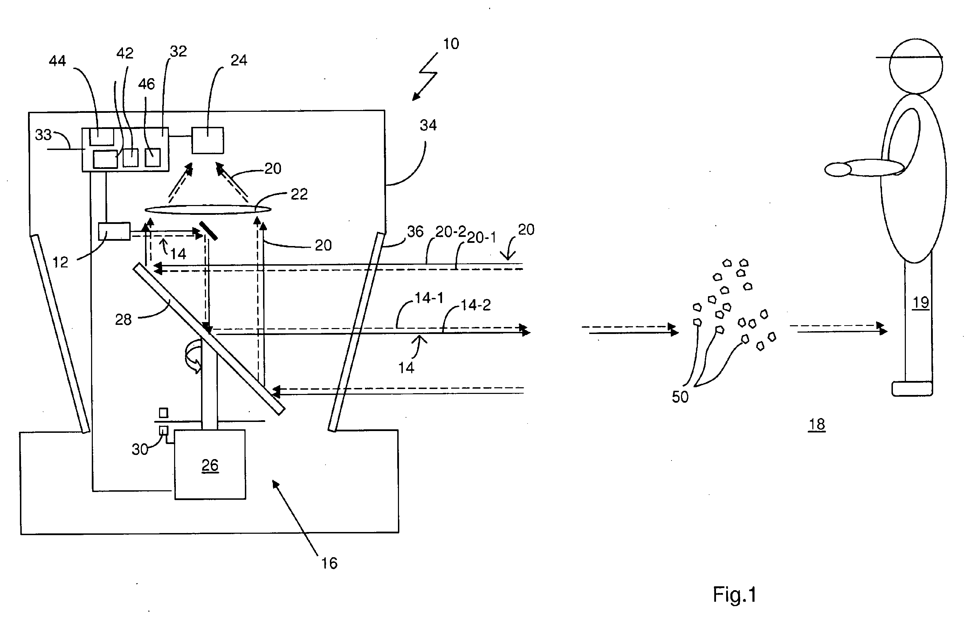

Fig. 1 zeigt schematisch den Aufbau einer Ausführungsform eines Sicherheits-Laserscanners 10. Die von einer Lichtsendeeinheit 12 erzeugten Laserlichtstrahlen 14, die aus einzelnen Lichtpulsen mindestens zweier unterschiedlicher Wellenlängen bestehen, werden über eine Lichtablenkeinheit 16 in einen einen Überwachungsbereich 18 einschließenden Sichtbereich gelenkt und dort von einem gegebenenfalls vorhandenen Objekt 19 remittiert. Der Sichtbereich umfasst den gesamten Öffnungswinkel des Scanners 10. Remittiertes Licht 20 gelangt wieder zurück zum Laserscanner 10 und wird dort über die Ablenkeinheit 16 und mittels einer Empfangsoptik 22 von einem (oder mehreren) Lichtempfänger 24 detektiert. Die Lichtablenkeinheit 16 ist in der Regel drehbar ausgestaltet, wobei ein Motor 26 einen Drehspiegel 28 kontinuierlich rotiert. Die jeweilige Winkelstellung des Drehspiegels 28 wird über einen Encoder 30 erfasst. Die von der Lichtsendeeinheit 12 erzeugten Lichtstrahlen 14 überstreichen somit den durch die Rotationsbewegung erzeugten Sichtbereich, in dem sich der Überwachungsbereich 18 befindet. Wird ein vom Lichtempfänger 24 empfangenes reflektiertes Lichtsignal 20 aus dem Sichtbereich 18 empfangen, so kann aus der Winkelstellung der Ablenkeinheit 30 auf die Winkellage des Objektes im Sichtbereich 18 geschlossen werden. Zusätzlich wird die Laufzeit der einzelnen Laserlichtpulse des Sendelichts 14 vom Aussenden bis zum Empfang einer Reflexion an dem Objekt, überwacht und aus der Lichtlaufzeit unter Verwendung der Lichtgeschwindigkeit auf die Entfernung des Objektes vom Laserscanner 10 geschlossen. Damit ist die Position der gemessenen Reflexion in Polarkoordinaten ermittelt.

Diese Auswertung erfolgt in einer Auswerteeinheit 32, die dafür mit der Lichtsendeeinheit 12, dem Lichtempfänger 24, dem Motor 26 und Encoder 30 verbunden ist. Mit den Winkel- und Entfernungsangaben lässt sich der Ort des Objektes 19 ermitteln und auf diese Weise der Überwachungsbereich 18 vollständig überwachen. Der Überwachungsbereich 18 ist in seinen Abmessungen durch entsprechende Parameter definiert, die in der Auswerteeinheit 32 in einem Speicher 54 abgelegt sind. Befindet sich im Überwachungsbereich 18 ein unzulässiges Objekt 19, so kann von der Auswerteeinheit 32 ein entsprechendes Objektfeststellungssignal an einem Ausgang des Laserscanners 10 über eine Leitung 33 ausgegeben werden und somit letztendlich ein Sicherheitssignal ausgegeben werden, um zum Beispiel einen Stopp einer Gefahr bringenden Maschine herbeizuführen.

Alle genannten Funktionskomponenten sind in einem Gehäuse 34 angeordnet, das frontseitig, also im Bereich des Lichtaus- und Lichteintritts, eine Frontscheibe 36 aufweist. Die Frontscheibe 36 ist zur Vermeidung von direkten Reflexionen in den Empfänger schräg gestellt, so dass der Winkel zwischen Lichtstrahl 14 und Frontscheibe 36 ungleich 90° beträgt.

Das bisher Beschriebene erläutert das Grundprinzip und den Grundaufbau eines Laserscanners. Der erfindungsgemäße Sicherheits-Laserscanner umfasst nun weitere Merkmale und Eigenschaften, die einen Outdoor-Einsatz ermöglichen.

Zunächst ist die Lichtsendeeinheit 12 so ausgebildet, dass sie Lichtpulse mit zwei verschiedenen Wellenlängen λ1 und λ2 aussenden kann. Dazu kann sie z. B. zwei Sendeelemente, beispielsweise zwei Laserdioden, aufweisen. In Fig. 1 sind die beiden Wellenlängen durch unterschiedliche Pfeile angedeutet, nämlich eine Wellenlänge λ1 als gestrichelter Pfeil 14-1 und eine andere Wellenlänge λ2 als durchgezogener Pfeil 14-2. Entsprechende Nomenklatur gilt für das Empfangslicht 20, das entweder als Empfangslicht 20-1 mit der Wellenlänge λ1 oder als Empfangslicht 20-2 mit der Wellenlänge λ2 vom Lichtempfänger 24 empfangen wird. Der Lichtempfänger 24 sollte dabei eine ausreichende Bandbreite haben, um das Licht beider Wellenlängen detektieren zu können. Der Empfänger 24 könnte beispielsweise aus einer oder zwei APD (Avalanche Photo Diode) bestehen.

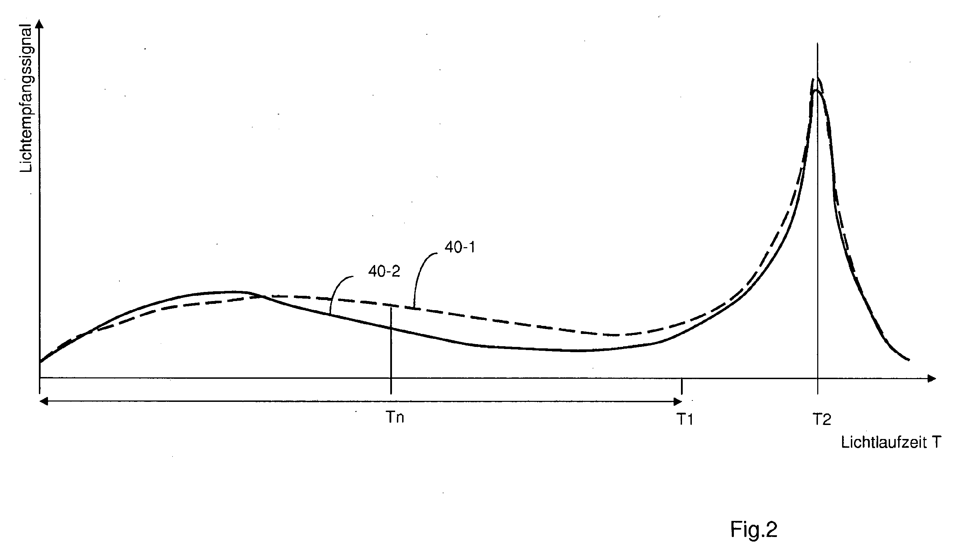

Fig. 2 zeigt zwei typische Empfangssignalverläufe 40-1 und 40-2 von Licht unterschiedlicher Wellenlänge λ1 bzw. λ2 einer exemplarischen Situation wie in Fig. 1 dargestellt, in der zwischen dem zu detektierenden harten Objekt 19 und dem Laserscanner 10 weiche Objekte 50, z. B. Nebeltröpfchen, vorhanden sind. Ein Empfangssignalverlauf ergibt sich, wenn zum Zeitpunkt T=0 ein Laserpuls 14-1 bzw. 14-2 ausgesandt wird und das Empfangssignal über die Zeit aufgetragen wird.

Der ausgesandte Laserpuls 14-1 mit Wellenlänge λ1 durchdringt zunächst (etwa im Zeitintervall 0 bis T1) den Nebel und es wird ein flaches Empfangssignal 40-1 erhalten, das irgendwo in dem Intervall ein leichtes Maximum hat (Mie Streuung). Dagegen ergibt sich bei T2, was der Reflexion an dem harten Objekt 19 entspricht, ein in der Regel höheres Signal, das in jedem Fall steilere Flanken hat (Lambertsche Streuung).

Wird nun ein zweiter Laserpuls 14-2 mit der Wellenlänge λ2 ausgesandt, ergibt sich qualitativ ein ähnlicher Verlauf. Allerdings zeigt sich das Maximum, das von der Streuung an den weichen Objekten 50 herrührt, zu einer anderen Laufzeit, und auch die Signalhöhe kann sich unterscheiden. Die Reflexion an dem harten Objekt 19 liefert, wie oben erklärt (Lambertsche Streuung), ein Empfangssignal, das zur gleichen Zeit T2 auftritt.

Damit lassen sich nun mehrere Situationen erkennen.

Aus einem einzigen Empfangssignalverlauf 40-1 oder 40-2 lässt sich insbesondere an der Flankensteilheit erkennen, dass die Reflexion zum Zeitpunkt T2 einem harten Objekt entspricht, denn nur ein hartes Objekt zeigt eine solch steile Flanke. Gegebenenfalls lässt sich alternativ oder zusätzlich auch der Maximalwert der Reflexion des harten Objekts mit dem Maximalwert der Nebelreflexion vergleichen und daraus eine Unterscheidung zwischen harten und weichen Reflexionen ableiten. Insbesondere, wenn man berücksichtigt, dass eine Reflexion in der Regel immer am Ende eine Empfangssignalverlaufs auftritt. Diese Auswertung erfolgt in einer Unterscheidungseinheit 42 der Auswerteeinheit 32.

Aus einem Vergleich der beiden Empfangssignalverläufe 40-1 mit 40-2 kann man erkennen, dass überhaupt Nebel vorhanden ist, denn dann treten die zwei Maxima auf. Dabei muss erwähnt werden, dass die Wellenlängen λ1 und λ2 derart gewählt sind, dass bei Nebel überhaupt ein signifikanter Unterschied in den Signalverläufen auftritt. Da die Mie-Streuung an weichen Objekten, wie einer Vielzahl von Wassertröpfchen in einem Nebel, ein sehr komplizierter und vielschichtiger Prozess ist (es treten eine Vielzahl von Reflexionen und Transmissionen in jedem der vielen und unterschiedlich großen Tröpfchen auf), lässt sich nicht analytisch bestimmen, wie die Maxima in Abhängigkeit der Wellenlänge liegen. Sie sind aber in der Regel getrennt und der Unterschied in den Wellenlängen sollte so gewählt werden, dass die Empfangssignalverläufe 40-1 und 40-2 sich gut unterscheiden lassen.

Ein solcher Unterschied könnte auch dadurch erfasst werden, dass man die Empfangssignalhöhen bei einer Laufzeit Tn vergleicht. Aus diesem Unterschied könnte man ebenfalls direkt erkennen, dass einerseits Nebel vorhanden ist und andererseits auch wie dicht der Nebel ist, wie stark also die Sichttrübung ist. Eine weitere alternative Auswertung wäre das integrale Empfangssignal zwischen T=0 und T=T1 auszuwerten.

Diese Erkennung und Auswertung der Sichttrübung erfolgt in einer Sichttrübungsbestimmungseinheit 44 der Auswerteeinheit 32.

Da das Maximum, das von der Reflexion an dem harten Objekt 19 herrührt, wellenlängenunabhängig bei der Zeit T2 liegt, könnte auch dies als Kriterium einer Erkennung von harten Objekten von der Unterscheidungseinheit 42 herangezogen werden. Wenn die Sichttrübungsbestimmungseinheit 44 den Grad der Sichttrübung bestimmen kann, kann sie bei Unterschreiten einer vorgegebenen minimalen Sichtweite das Sicherheitssignal an dem Ausgang über die Leitung 33 ausgeben.

Die beiden Sendelemente der Lichtsendeeinheit 12 könnten die Lichtpulse zeitlich versetzt aussenden und der Empfänger 24 mit entsprechendem zeitlichen Versatz empfangen. Die Signalaufbereitung erfolgt dann über einen gemeinsamen analogen Kanal, die Signalverläufe werden digital in einer Sampelstufe 46 gesampelt, und die digitalen Signale der beiden Wellenlängen miteinander verglichen, wie oben erläutert.

Auch wenn nicht der gesamte Signalverlauf digital gesampelt werden muss, weil wie oben beschrieben die Sichttrübungserkennung nur an einem Zeitpunkt Tn erfolgt, können die Signale der beiden Wellenlängen durch einen zeitlichen Versatz voneinander getrennt gemessen und über den gleichen Signalpfad digitalisiert, gespeichert und anschließend verarbeitet werden.

In einer alternativen Ausführungsform kann statt der Verwendung zweier Sendeeinheiten auch ein Teil des ausgesandten Lichtes einer einzigen Sendelaserdiode mittels eines nichtlinearen Elements in seiner Frequenz verdoppelt werden. Die beiden Wellenlängen wären dann spektral weit voneinander getrennt (beispielsweise 1550nm und 775nm) und die beiden optischen Signale könnten im Empfangspfad optisch, z. B. mittels dichroitischer Spiegel, getrennt und mit einem zweiten neben dem ersten Lichtempfänger verarbeitet werden. Dieses Verfahren hat den Vorteil, dass die zeitliche Korrelation der beiden Signale direkt in der Signalverarbeitung genutzt werden könnte.

## Patentansprüche

1. Sicherheits-Laserscanner zur sicheren Erfassung und Positionsbestimmung von Objekten (19) in einem Überwachungsbereich mit
- einer Lichtsendeeinheit (12), die Lichtpulse (14-1, 14-2) zweier unterschiedlicher Wellenlängen (λ1 und λ2) aussendet,
- einer Ablenkeinheit (16) zum periodischen Abscannen eines den Überwachungsbereich (18) einschließenden Sichtbereichs des Scanners (10) mit dem Sendelicht (14);
- einem Lichtempfänger (24) zum Bereitstellen von Empfangssignalen entsprechend der an Objekten (50, 19) im Sichtbereich gestreuten Sendelichtpulse,
- einer Auswerteeinheit (32) zum Auswerten der Empfangssignale und Bestimmen der Lichtlaufzeit, so dass über die Lichtlaufzeit und den Drehkwinkel der Ablenkeinheit (16) eine Position der Reflektion bestimmbar ist und zum Ausgeben eines Sicherheitssignals, wenn ein unzulässiges Objekt (19) im Überwachungsbereich (18) detektiert wird,
- und die Auswerteeinheit (32) eine Sichttrübungserkennungseinheit (44) umfasst, die ausgebildet ist, unterschiedliche zeitliche Verläufe (40-1 und 40-2) zu erfassen und aus einem Vergleich der Verläufe eine Sichttrübung zu erkennen,
- und die Auswerteeinheit (32) eine Unterscheidungseinheit (42) umfasst, die die Empfangssignale von Reflektionen an unzulässigen Objekten (19) von den Empfangssignalen von Streuungen an den Objekten (50) differenziert,
**dadurch gekennzeichnet,**
- **dass** die Lichtpulse von zwei Lichtsendeelementen zeitlich versetzt ausgesendet werden,
- **dass** im Empfangspfad zwei Lichtempfänger zur Detektion der beiden Wellenlängen vorhanden sind und
- **dass** die beiden Wellenlängen (λ1 und λ2) derart ausgewählt sind, dass bei gleichem Drehwinkel der Ablenkeinheit (16) die den beiden Wellenlängen entsprechenden Empfangssignale bei Streuung an eine Sichttrübung verursachenden Objekten (50) unterschiedliche Maxima und/oder unterschiedliche Flankensteigungen eines zeitlichen Empfangssignalverlaufs (40-1 und 40-2) aufweisen,

2. Sicherheits-Laserscanner nach einem der vorhergehenden Ansprüche, **dadurch gekennzeichnet, dass** die Sichttrübungserkennungseinheit Maxima der unterschiedlichen Empfangssignalverläufe erfassen und vergleichen kann und/oder Empfangssignalhöhen bei gleicher Laufzeit in den unterschiedlichen Verläufen erfassen und vergleichen kann.

3. Sicherheits-Laserscanner nach einem der vorhergehenden Ansprüche, **dadurch gekennzeichnet, dass** die Sichttrübungserkennungseinheit eine Sichtweite bestimmen kann und bei Unterschreiten einer vorgegebenen minimalen Sichtweite das Sicherheitssignal ausgeben kann.

4. Sicherheits-Laserscanner nach einem der vorhergehenden Ansprüche, **dadurch gekennzeichnet, dass** die Lichtsendeeinheit nur ein Lichtsendeelement aufweist und die zweite Wellenlänge durch Frequenzkonversion bereitgestellt wird und die beiden Wellenlängen im Empfangspfad getrennt werden (z. B. dichroitische Spiegel).

5. Sicherheits-Laserscanner nach einem der vorhergehenden Ansprüche, **dadurch gekennzeichnet, dass** die Empfangssignale in einer digitalen Sampelstufe erfasst werden.

6. Sicherheits-Laserscanner nach einem der vorhergehenden Ansprüche, **dadurch gekennzeichnet, dass** der Scanner nach dem Pulsmittelungsverfahren arbeitet.

## Claims

1. A safety laser scanner for the secure detection and determination of the position of articles (19) in a monitored zone, comprising:
- a light transmission unit (12) which transmits pulses of light (14-1, 14-2) of two different wavelengths (λ1 and λ2);
- a deflection unit (16) for the periodic scanning of a visible region of the scanner (10) with the transmitted light (14), the visible region including the monitored zone (18);
- a light receiver (24) for the provision of received signals corresponding to transmitted pulses of light scattered at articles (50, 19) in the visible region;
- an evaluation unit (32) for the evaluation of the received signals and the determination of the time of light of light so that a position of the reflection can be determined via the time of flight of light and the angle of rotation of the deflection unit (16) and for the output of a safety signal when a non-allowed article (19) is detected in the monitored zone (18);
- wherein the evaluation unit (32) comprises an obscuration detection unit (44) which is configured to detect different time paths (40-1 and 40-2) and to detect an obscuration from a comparison of the paths;
- and wherein the evaluation unit (32) comprises a comparison unit (42) which differentiates the received signals of reflections at non-allowed articles (19) from the received signals of scattering at the articles (50),
**characterized in that**
- the light pulses of two light transmission elements are transmitted spaced apart in time;
- **in that** two light receivers are present in the reception path for the detection of the two wavelengths; and
- **in that** the two wavelengths (λ1 and λ2) are selected such that the received signals corresponding to the two wavelengths have different maxima and/or different edge gradients of a received signal time path (40-1 and 40-2) on a scattering at articles (50) causing an obscuration for the same angle of rotation of the deflection unit (16).

2. A safety laser scanner in accordance with the preceding claim, **characterized in that** the obscuration detection unit can detect and compare maxima of the different received signal paths and/or can detect and compare received signal heights for the same time of flight in the different paths.

3. A safety laser scanner in accordance with one of the preceding claims, **characterized in that** the obscuration detection unit can determine a visible range and can output the safety signal on a falling below of a predefined minimum visible range.

4. A safety laser scanner in accordance with any one of the preceding claims, **characterized in that** the light transmission unit only comprises one light transmission element and the second wavelength is provided by a frequency conversion and the two wavelengths are separated in the reception path (e.g. dichroitic mirrors).

5. A safety laser scanner in accordance with any one of the preceding claims, **characterized in that** the received signals are detected in a digital sampling stage.

6. A safety laser scanner in accordance with any one of the preceding claims, **characterized in that** the scanner works in accordance with the pulse averaging method.

## Revendications

1. Scanner de sécurité à laser destiné à détecter de manière sûre et à déterminer la position d'objets (19) dans une zone de surveillance, comprenant
- une unité émettrice de lumière (12), qui émet des impulsions de lumière (14-1, 14-2) avec deux longueurs d'onde différentes (λ1 et λ2),
- une unité de déflexion (16) pour balayer périodiquement avec la lumière émise (14) une zone de vision du scanner (10) qui englobe la zone de surveillance (18) ;
- un récepteur de lumière (24) pour préparer des signaux reçus correspondant aux impulsions de lumière émise diffusée sur les objets (50, 19) dans la zone de vision,
- une unité d'évaluation (32) pour évaluer les signaux reçus et déterminer le temps de parcours de la lumière, de sorte qu'au moyen du temps de parcours de la lumière et de l'angle de rotation de l'unité de déflexion (16) il est possible de déterminer une position de la réflexion, et pour délivrer un signal de sécurité quand un objet inadmissible (19) est détecté dans la zone de surveillance (18),
- et l'unité d'évaluation (32) inclut une unité de reconnaissance de voilage de vision (44) qui est réalisée pour détecter des évolutions temporelles différentes (40-1 et 40-2) et pour reconnaître un voilage de vision à partir d'une comparaison des évolutions,
- et l'unité d'évaluation (32) inclut une unité de différenciation (42) qui différencie les signaux reçus provenant de réflexions sur des objets inadmissibles (19) et les signaux reçus provenant de diffusions sur les objets (50),
**caractérisé en ce que**
- les impulsions de lumière sont émises par deux éléments émetteurs de lumière de manière décalée dans le temps,
- deux récepteurs de lumière sont prévus dans le trajet de réception pour la détection des deux longueurs d'onde, et
- les deux longueurs d'onde (λ1 et λ2) sont choisies de telle façon que pour un même angle de rotation de l'unité de déflexion (16), les signaux reçus correspondant aux deux longueurs d'onde présentent, en cas de diffusion sur des objets (50) provoquant un voilage de vision, des maxima différents et/ou des pentes de flanc différentes dans une évolution temporelle des signaux reçus (40-1 et 40-2).

2. Scanner de sécurité à laser selon l'une des revendications précédentes, **caractérisé en ce que** l'unité de reconnaissance de voilage de vision est capable de détecter et de comparer des évolutions différentes des signaux reçus, et/ou de détecter et de comparer des intensités des signaux reçus pour le même temps de parcours dans les différentes évolutions.

3. Scanner de sécurité à laser selon l'une des revendications précédentes, **caractérisé en ce que** l'unité de reconnaissance de voilage de vision est capable de déterminer une distance de vision et de délivrer le signal de sécurité lors du passage au-dessous d'une distance de vision minimale prédéterminée.

4. Scanner de sécurité à laser selon l'une des revendications précédentes, **caractérisé en ce que** l'unité émettrice de lumière comprend un seul élément émetteur de lumière, et la seconde longueur d'onde est préparée par conversion de fréquence, et les deux longueurs d'onde sont séparées dans le trajet de réception (par exemple miroir dichroïque).

5. Scanner de sécurité à laser selon l'une des revendications précédentes, **caractérisé en ce que** les signaux reçus sont exploités dans un étage d'échantillonnage numérique.

6. Scanner de sécurité à laser selon l'une des revendications précédentes, **caractérisé en ce que** le scanner fonctionne d'après le principe du moyennage d'impulsions.
